# EUROPEAN PATENT SPECIFICATION

(11) **EP 0 552 710 B1**
(45) Date of publication and mention of the grant of the patent: **05.03.1997**
(21) Application number: 93100715.7
(22) Date of filing: 19.01.1993
(51) Int. Cl.: F16L 47/00, F16L 41/02, F16L 41/08

(54) **Branch piece for plastics ducts or tanks**
Verbindungseinheit für Leitungen oder Behälter aus Kunststoff
Pièce de jonction pour conduits ou réservoirs en matière plastique

(30) Priority: 24.01.1992 IT GE920004 U
(43) Date of publication of application: 28.07.1993
(73) Proprietor: TECNO PLASTIC S.p.A., 16012 Busalla (IT)
(72) Inventor: Tubaro, Federico, I-16030 Sori (IT)
(74) Representative: Porsia, Bruno

(56) References cited:
- EP-A- 0 304 246
- EP-A- 0 341 494
- GB-A- 942 239
- GB-A- 2 043 841
- US-A- 1 883 439
- US-A- 3 649 055

## Description

The present invention relates to a branch piece connection comprising a branch piece of plastics material and a cylindrical plastic duct or tank, the cylindrical plastic duct or tank particularly containing fluids under pressure, of the type normally used in fields relating to aqueducts, irrigation, industrial plant engineering and the treatment of fluids in general, which branch piece can generally, but not indispensably, be provided at a later time, that is, on a seated duct or tank, by having a branch stub tightly attached to the outer surface of the duct or tank through a flange which is shaped conformably to the curved shape of the duct or tank outer surface and is bonded with an adhesive thereon, as well as by having a matching bore made in the duct or tank wall, either beforehand or preferably after the attachment of the branch stub, according to the pre-characterising part of claim 1.

A branch piece connection of this kind is known from the document US-A-3649055. The flange of the stub of this known branch piece has a rectangular shape with the longer sides of the rectangle parallel to the longitudinal axis of the duct. Moreover, the flange of this known branch stub extends over the circumference of the duct cross section by an angle in excess of 180° and, for example, it extends circumferentially over an arc of approximately 220°.

The document EP-A-304246 discloses an analogous branch piece connection for cylindrical ducts but it is not specifically directed to plastic pipes or tanks. Also this known branch piece has a stub flange of rectangular shape with the longer sides of the rectangle parallel to the longitudinal axis of the duct. Although the flange of the branch stub extends over the circumference of the duct cross section by an angle smaller than 120°, the minimum width of said rectangular-shaped flange, that is, the distance between the inward and the outward edge of this flange is greater than the inside diameter of the branch stub.

From the document GB-A-942239 a T-shaped saddle-type fitting for a pipe line is known, which is designed to be welded and not to be bonded with an adhesive to a main pipe. Furthermore also this document is not specifically directed to plastic pipes or plastic fittings. Although the flange of this known saddle-type fitting has an oval-shaped flange, this flange is oriented with its major axis parallel to the longitudinal axis of the main pipe.

The invention aims to eliminate any inconvenience arising from the known embodiments, and the object thereof is to render the branch piece connection, of the kind as stated at the outset, simpler and less expensive, and a perfectly tight seal, as well as a very good mechanical (fastening) strength and resistance to internal pressures, will be ensured by simple adhesive bonding.

According to the characterising part of claim 1, the aforesaid object is attained by the invention by the combination of the following features:
a) the flange of branch stub has an oval shape,
b) the width of the oval-shaped flange of branch stub, that is the average value of the distance between the inward and the outward edge of said flange, is varied between a minimum value corresponding to half the inside diameter of branch stub in a level with its flange, and a maximum value corresponding to the inside diameter of branch stub,
c) the flange of branch stub extends over the circumference of the duct or tank cross section by an angle not exceeding 120°.

This characterising combination of configuration and sizing features determine a perfect, that is, continuos, complete and tight adhesive bonding of the branch stub flange to the outer surface of the duct or tank, and is based on the recognition that the to-be-bonded flange area should be the smallest possible, compatibly with the desired or required mechanical strength and resistance to internal pressure. In fact, the more reduced is the flange area (compatibly with the mechanical strength and pressure resistance values), the more precise will be the mating of the to-be-bonded flange inward surface with the duct or tank outer surface, (the effect of the inevitable manufacturing tolerances being thus diminished), so that the more continuos and uniform adhesive bonding of these surfaces will be achieved.

For the branch piece connection according to the invention, it is sufficient that substantially only that part of the outer surface of a duct, to which the flange of a branch stub is to be adhered, be clear and accessible. For the adhesive bonding of the branch stub to the duct any suitable adhesive compatible with the materials to be bonded, and with the fluids conveyed through the duct, may be used. If, as it rather frequently occurs, a duct and a branch stub are made of PVC or ABS, currently available adhesives or solvents for PVC may be used, such as those known in the trade by the names TANGIT or BOSTON (Registered Trade Marks).

For the adhesive bonding operation, suitable auxiliary means may even not be needed, since, in some instances, it is sufficient to hold manually in place a branch stub on a duct, by exerting a light pressure on the branch stub, until the adhesive has set to a certain degree. In other instances, any suitable positioning and pressing means, and even makeshift means, may be used for this purpose.

According to one preferred embodiment of the invention, means may be provided on the outward side of the flange of a branch stub, such as two diametrically opposite pins, whereby the branch stub can be tied to a duct, and the branch stub flange can be pressed against the duct outer surface, with the aid, for example, of an annular rubber band stretched around the duct and fastened to the pins, so that the positioning of the branch stub and the pressure for causing it to adhere to the duct is ensured, up to completion of the bonding process.

Other preferred embodiments of the invention are characterized in the remaining dependent claims.

Some embodiments of branch stubs according to the invention will be described thereafter and are shown by way of non-limiting examples in the accompanying drawings, in which:

Figure 1 is a sectional view of a duct with a branch stub being bonded to the duct outer surface, which shows two different embodiments of the branch stub.

Figure 2 shows two other embodiments of the branch stub.

Figure 3 is a perspective view of the branch stub according to Figure 2, showing the branch stub in bonded condition and temporarily tied to a duct.

Figure 4 is a sectional view showing a further embodiment of the branch stub.

Figure 5 is a sectional view showing still a further embodiment of the branch stub connection according to the invention, in which the branch stub axis is at an angle of 45° relative to the duct axis.

In the Figures, reference numeral 1 denotes a duct, particularly of plastics material. To provide a branch from duct 1, even at a later time, that is, after the duct has been seated, the flange 2 of branch stub 3, or 3', or 3", or 3"', or 3"" is caused to adhere to the peripheral outer surface of duct 1, and a bore 4 is subsequently, or beforehand, made in the wall of duct 1, at the branch stub location. The branch stub flange 2 is bent conformably to the outside diameter of duct 1. Preferably, the width D of the branch stub flange 2 may be varied between a minimum value, corresponding to half the width of the inside diameter "d" of branch stub 3, 3', 3", 3"', 3"" on a level with its flange 2, and a maximum value, corresponding to the inside diameter "d" of the branch stub.

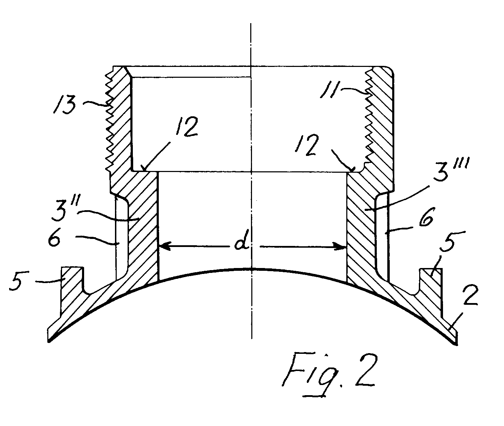

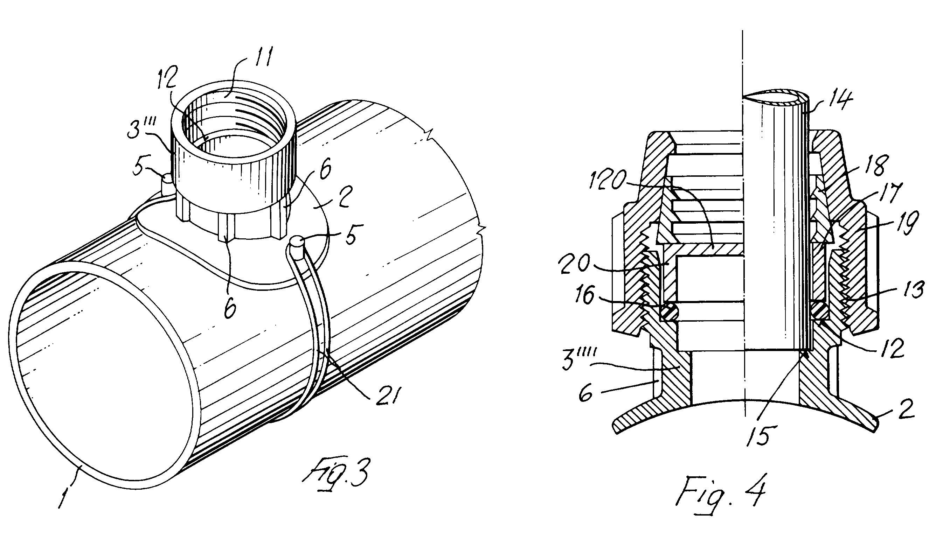

In the embodiment according to Figures 2 and 3, two pins 5, or the like, are provided on the outward face of flange 2 of branch stub 3", 3"', and are arranged in diametrically opposite positions on a plane crossing duct 1. Thanks to the provision of these pins 5, a branch stub 3", 3"' can be tied to duct 1 by means, for example, of an annular rubber band 21, or the like, which is stretched around duct 1 and is fastened to pins 5, as shown in Figure 3. This allows to have a branch stub 3", 3"' hold in place on duct 1 and pressed thereagainstby its flange 2, up to completion of the bonding process, that is, until the branch stub is firmly attached to duct 1. Of course, the pins 5, or the like, may also be provided in any of the other embodiments of the branch stub according to the invention.

Also the branch stub 3, 3', 3", 3"', 3"" and its flange 2 are currently made of plastics material, particularly by injection molding, and preferably of the same plastics material as duct 1, and an adhesive or solvent suitable for the respective plastics material is used for having the flange 2 of branch stub 3, 3', 3", 3"', 3"" bonded to duct 1. When a duct 1, and a branch stub 3, 3', 3", 3"', 3"" and its flange 2 are made of PVC, the adhesive to be used may be any available adhesive for PVC, such as the adhesives known in the trade by the names TANGIT or BOSTON (Registered Trade Marks).

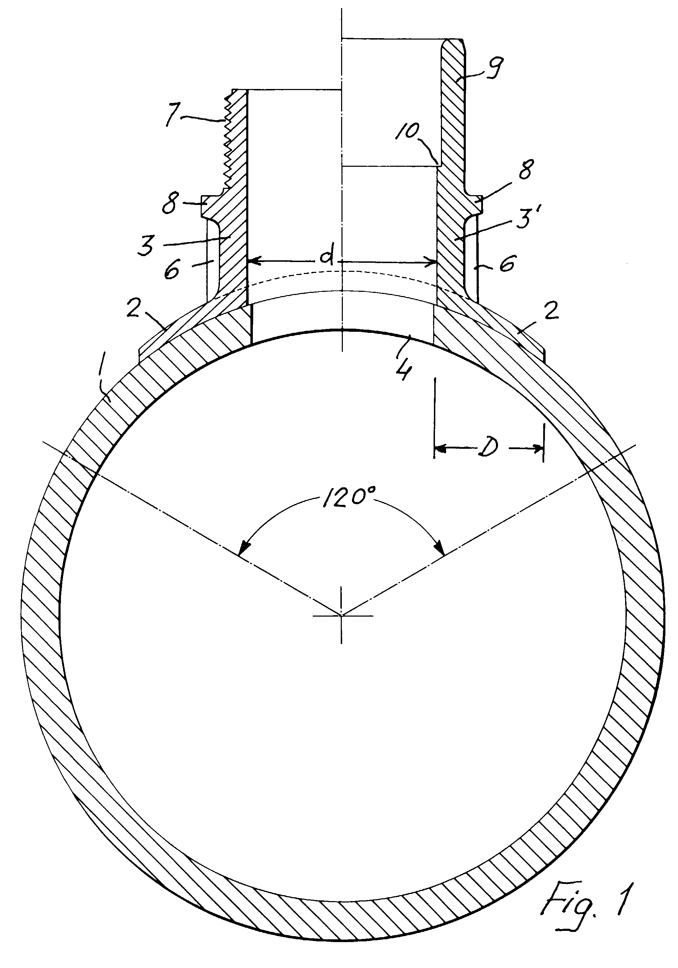

The branch stub flange 2 extends over the periphery of the cross-section of a duct 1 by an angle which does not exceed the maximum value of 120°, as shown in Figure 1.

The branch stub 3, 3', 3", 3"', 3"" according to the invention, can be attached not only to a cylindrical duct 1, but also to a tank having a cylindrical shape.

In every one of the above described cases, the branch stub 3, 3', 3", 3"', 3"" and the duct 1 may be made of any suitable plastics material, and can be mutually bonded by means of a proper adhesive, such as ABS.

The branch stub 3, 3', 3", 3"', 3"" may be made in any suitable manner, and it may ben for example, fitted with any suitable means for connection to a pipe, ot it may form an integral or complementary part of a pipe connector piece for connection of a rigid or flexible pipe, or of any device, such as a valve, or the like.

In the shown embodiments, the branch stubs 3, 3', 3", 3"', 3"" are all formed at their lower end section adjoining their flange 2, with longitudinal, outward stiffening ribs 6. The branch stub 3, shown in the left-hand half of Figure 1, is formed at its free upper end section with an external thread 7, located inwardly relative to an underlying, outward annular collar 8. The branch stub 3' shown in the right-hand half of Figure 1, is instead formed with an upper end section 9 having a flat outer surface which extends past the annular collar 8, and with an internal step 10 for limiting the depth of ccnnection with a pipe or pipe connector piece (not shown), to be fitted into the end section 9 of branch stub 3'. The outward collar 8 is for limiting the depth of connection with a pipe or pipe connector piece, to be threaded or fitted on the outside of the end section 7, 9 of branch stub 3, 3'.

The branch stub 3"' shown in the right-hand half of Figur 2, is formed with an internal thread 11, and with an internal step 12 which performs the same limiting function as the step 10. The branch stub 3" shown in the left-hand half of Figure 2 is still provided with the internal step 12, but it is formed with an external thread 13. The branch stub 3"' is also shown in Figure 3.

Shown in Figure 4 is a branch stub 3"" which forms an integral part of a pressure connector piece for connection of a rigid of flexible pipe 14. This branch stub 3"" is similar to the branch stub 3", but it is formed not only with an external thread 13 and an internal step 12, but also with an inner step 15 for an edge of pipe 14 to abut thereagainst. This pressure connector piece includes a packing ring 16 arranged around pipe 14 and resting on the internal step 12 in branch stub 3"". The packing ring 16 is compressed against the step 12 by a cylindrical inner spacer sleeve 17,and a pipe-clamping ring 18 formed with inward teeth, and with a conical outer surface cooperating with the matching, conical inner surface of an external ring nut 19 threaded on the external thread 13 formed in branch stub 3"", as shown in the right-hand half of Figure 4. With this arrangement, on the ring nut 19 being screwed down on branch stub 3"", the ring nut 19 will radially press inwardly by its conical inner surface the pipe-clamping ring 18, by being caused to act on the conical outer surface thereof, whereby the clamping ring 18 comes to be connected with pipe 14, and comes to be simultaneously driven axially toward the internal step 12 in branch stub 3"", whereby the packing ring 16 comes to be compressed through the cylindrical inner spacer sleeve 17, against the step 12. Thus, the branch obtained by means of a branch stub 3"", which is adhered or bonded to a duct or tank, is tightly connected with pipe 14. When the use of this branch is not required, the pipe 14 is taken off, and in place of the cylindrical inner spacer sleeve 17 there is fitted a closure cap 20 consisting, for example, of a spacer sleeve which is like the cylindrical spacer sleeve 17, but it is provided with an intercepting end plate 120 made of one piece therewith, as shown in the left-hand side of Figure 4. The branch stub 3"" which is adhered or is bonded to the outer surface of duct 1 or of a tank, thus comes to be tightly closed by this closure cap 20, but it can be opened again when needed.

In any embodiments of the invention, the flange 2 or 102 for attachment of a branch stub has an oval shape. With oval flanges, an average value, or the value referred to a circumscribed or inscribed circle, will be considered to be the flange width D.

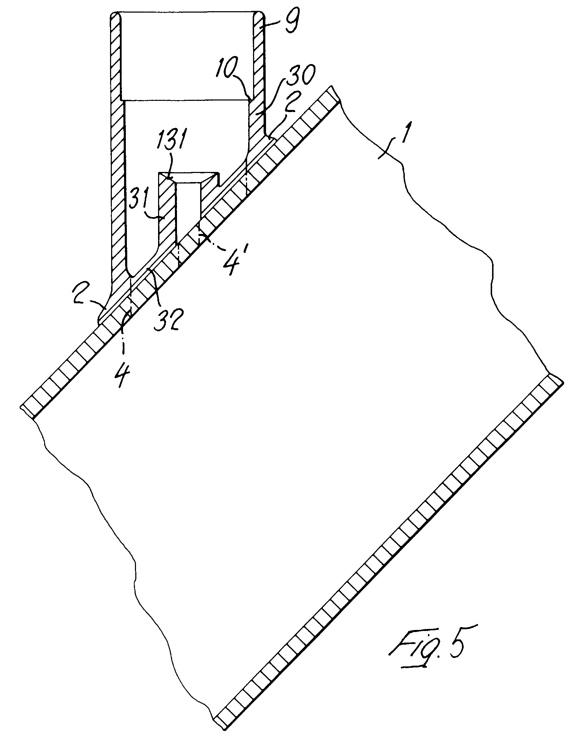

The branch stub according to Figure 5 designated by reference numeral 30, is a modified embodiment of the branch stub 3' shown in Figure 1, and differs from the latter in that the axis of branch stub 30 is arranged at an angle other than the 90° angle shown in Figure 1. Otherwise, those parts which are like or perform an equal function, are designated in Figure 5 by the same reference numerals. In the example shown in Figure 5, the axis of branch stub 30 is arranged at an angle of 45° relative to the axis of duct 1. Of course, the axis of branch stub 30 may be arranged at any suitable angle, such as, particularly, of 60°, 75°, 87° 30, or the like.

According to an improved embodiment, in order to be enabled to make more easily and accurately a bore in duct 1, after the branch stub 30 has been fixed in position, this stub is fitted at its interior with a means for guiding a perforating tool.

The perforating tool guiding means is so provided that it may be caused to cooperate either with a drilling bit, for making a small sized, coaxial bore 4', or with a cup shaped borer with centering pin, for making a big sized bore 4 of a diameter substantially corresponding to the inside diameter of branch stub 30.

In this embodiment, the tool-guiding means is in form of a bit- or centering pin-guiding tubular element 31 arranged coaxially to branch stub 30 by its lower end resting on duct 1. The bit- or centering pin-guiding element 31 has a diameter which is much smaller than the inside diameter of branch stub 30, and substantially agrees with the diameter of a drilling bit for making a small of medium sized bore 4'.

The bit- or centering pin-guiding tubular element 31 is attached to the inside of branch stub 30 by a plurality of radially arranged connecting staples or by an end plate 32, whereby the flanged end edge of stub 30 facing duct 1, and the matching, lower end edge of said guiding tubular element 31 are mutually connected. The loose, upper end edge of the bit- or centering pin-guiding tubular element 31 inside stub 30 is also formed with a conically flaring opening 131.

With the aid of the bit- or centering pin-guiding element 31, a bore can be made in duct 1 in an extremely easy and accurate manner, since the bit or centering pin is thus prevented from slipping on the outer surface of the wall of duct 1. It is possible to use drilling bits of a small diametern which are passed through the central bore in the bit- or centering pin-guiding tubular element 31, or drilling bits of a greater diameter, which, simultaneously with their drilling action, will either totally or partly erode also the bit- or centering pin-guiding element 31. It is also possible to use cup shaped borers with centering pin. The centering pin is then guided by the guiding element 31, and simultaneously with the duct 1 being thus perforated, the staples or the end plate 32, respectively for connecting or fastening the bit or centering pin-guiding element 31 to branch stub 30, are also taken off.

This type of branch stubs may also be used with advantage in discharge systems where pressures are considerably low. In such a particular application, the flanges by which the branch stubs 30 are adhered of bonded, may extend over the periphery of the cross-section of duct 1 by an angle even smaller than 90°.

Of course, the invention is not limited to the just described and shown embodiments, but comprises any embodiments as described by the appended claims.

## Claims

1. A branch piece connection comprising a branch piece of plastics material and a cylindrical plastic duct (1) or tank, the cylindrical plastic duct (1) or tank particularly containing fluids under pressure, of the type normally used in fields relating to aqueducts, irrigation, industrial plant engineering and the treatment of fluids in general, which branch piece can generally, but not indispensably, be provided at a later time, that is, on a seated duct or tank, by having a branch stub (3, 3',3", 3"',3"", 30) tightly attached to the outer surface of the duct (1) or tank through a flange (2) which is shaped conformably to the curved shape of the duct (1) or tank outer surface and is bonded with an adhesive thereon, as well as by having a matching bore (4, 4') made in the wall of duct (1) or tank wall, either beforehand or preferably after the attachment of a branch stub (3, 3', 3", 3"', 3"", 30), characterized in that
a) the flange (2) of branch stub (3, 3', 3", 3"', 3"", 30) has oval shape.
b) the width of the oval-shaped flange (2) of branch stub (3, 3', 3", 3"', 3"", 30), that is the average value of the distance between the inward and the outward edge of said flange (2) is varied between a minimum value corresponding to half the inside diameter (d) of branch stub (3, 3', 3", 3"', 3"", 30) in a level with its flange (2, 102), and a maximum value corresponding to the inside diameter (d) of branch stub (3, 3', 3", 3"', 3"", 30),
c) the flange (2) of branch stub (3, 3', 3", 3"', 3"", 30) extends over the circumference of the duct (1) or tank cross section by an angle not exceeding 120°.

2. The branch piece connection according to claim 1, characterized in that means (5), particularly two diametrically opposite pin means, are provided on the outward face of flange (2) of branch stub (3, 3', 3", 3"', 3"", 30), in a plane crossing duct (1), whereby a branch stub (3, 3', 3", 3"', 3"", 30) can be temporarily tied to duct (1), in order to ensure that the branch stub be correctly positioned, and its flange (2) be pressed against the duct (1) outer surface, until the mutual bonding of flange (2) and duct (1) is accomplished.

3. The branch piece connection according to claims 1 or 2, characterized in that inside of the branch stub (30), bit- or centering pin-guiding means (31), extending from the flanged branch stub end edge to be attached to duct (1) or tank, are provided for guiding a drilling bit or a cup shaped borer with centering pin when a bore (4,4') is being made in the wall of duct (1) or tank subsequently to the branch stub (30) having been bonded to duc (1) or tank.

4. The branch piece connection according to claim 3, characterized in that the bit- or centering pin-guiding means (31) are made of one piece with the branch stub (30) and by the same manufacturing process, particularly by injection molding of branch stub (30).

5. The branch piece connection according to claim 4, characterized in that the bit- or centering pin-guiding means is in form of a bit- or centering pin-guiding tubular element (31) which is provided at the interior of branch stub (30) coaxially thereto, and extends from the flanged end edge of branch stub (30) to be attached to duct (1), the said bit- or centering pin-guiding tubular element (31) having a diameter which is considerably smaller than the diameter of branch stub (30), and having its lower end edge fastened to the flanged end edge of branch stub (30) to be attached to duct (1), by means of a plurality of radially arranged connecting staples, or by means of an end plate (32), which when a bore (4) is being made in duct (1) by a borer with centering pin, is taken off by this borer, while when a bore (4') of a small- or medium-size diameter is being made in duct (1) by a drilling bit, it is only the bit- or centering pin-guiding tubular element (31) that is taken off either totally or partly, or that is not taken off at all.

6. The branch piece connection according to claim 4, characterized in that the loose upper end of the bit- or centering pin-guiding tubular element (31) located inside branch stub (30) is formed with a conically flaring opening (131).

7. The branch piece connection according to any of the preceding claims 1 to 6, characterized in that the branch stub (3, 3') is formed with an external thread (7, 13).

8. The branch piece connection according to any of the preceding claims 1 to 6, characterized in that the branch stub (3"') is formed with an internal thread (11).

9. The branch piece connection according to any of the preceding claims 1 to 6, characterized in that the branch stub (3', 30) is formed with an inner and outer cylindrical surface (9), which is to be bonded to a pipe or pipe connector piece fitted into or on this stub (3', 30).

10. The branch piece connection according to any of the precedign claims 1 to 9, characterized in that the branch stub (3, 3') is formed with an outward annular collar (8).

11. The branch piece connection according to any of the preceding claims 1 to 10, characterized in that the branch stub (3, 3') is formed with at least one external step which is for limitin the depth of connection with a pipe or pipe connector piece fitted on this stub (3, 3').

12. The branch piece connection according to any of the preceding claims 1 to 11, characterized in that the branch stub (3, 3', 3", 3"', 3"", 30) is formed with at least one internal step (10, 12) which is for limiting the depth of connection with a pipe (14) or a pressure connector piece (16, 17, 18) engaged with this stub (3', 3", 3"', 3"", 30).

13. The branch piece connection according to any of the preceding claims 1 to 11, characterized in that the branch stub (3, 3', 3", 3"', 3"", 30) is formed with spaced apart longitudinal stiffening ribs (6) at least over that section thereof which is adjacent to its flange (2).

14. The branch piece connection according to claims 7 and 12, characterized in that the branch stub (3"") forms an integral part of a pressure connector piece for connection of a rigid or flexible pipe (14), the said connector piece comprising a pipe-clamping ring (18) formed with inward teeth, and with an external conical surface being caused to cooperate with an inner conical surface of a ring nut (19) which is threaded on the external thread (13) in branch stub (3""), a cylindrical, inner spacer sleeve (17) being interposed between the pipe-clamping ring (18) and a packing ring (16) resting on the internal step (12) in branch stub (3""), and the said spacer sleeve (17) being replaceable with a substantially equally sized closure cap (20) having an integral intercepting plate (120) at the head end thereof.

## Patentansprüche

1. Abzweigungsteil-Verbindung mit einem Abzweigungsteil aus Kunststoffmaterial und einer zylindrischen Kunststoffleitung (1) oder einem solchen Behälter, wobei die zylindrische Kunststoffleitung (1) oder der Behälter insbesondere Fluide unter Druck enthält, des Typs, der normalerweise auf Gebieten verwendet wird, die Wasserleitungen, Bewässerung, industriellen Anlagenbau und die Behandlung von Fluiden allgemein betreffen, wobei das Abzweigungsteil allgemein, aber nicht notwendigerweise, zu einem späteren Zeitpunkt, d. h. an einer festsitzenden Leitung oder einem festsitzenden Behälter vorgesehen werden kann, indem man einen Abzweigungsansatz (3, 3', 3", 3"', 3"", 30) fest an die Außenoberfläche der Leitung (1) oder des Behälters über einen Flansch (2) angesetzt vorliegen hat, welcher in Übereinstimmung mit der gekrümmten Form der Außenoberfläche der Leitung (1) oder des Behälters geformt ist und mit einem Klebstoff daran gebunden ist, und indem man eine in der Leitungswand (1) oder der Behälterwand entweder von vornherein oder vorzugsweise nach der Befestigung des Abzweigungsansatzes (3, 3', 3", 3"', 3"", 30) erzeugte passende Bohrung (4, 4') hat, **dadurch gekennzeichnet,** daß
a) der Flansch (2) des Abzweigungsansatzes (3, 3', 3", 3"', 3"", 30) ovale Form hat,
b) die Breite des ovalförmigen Flansches (2) des Abzweigungsansatzes (3, 3', 3", 3"', 3"", 30), die der Mittelwert des Abstandes zwischen der Innen- und Außenkante des Flansches (2) ist, zwischen einem Mindestwert entsprechend der Hälfte des Innendurchmessers (d) des Abzweigungsansatzes (3, 3', 3", 3"', 3"", 30) in einer Höhe mit seinem Flansch (2, 102) und einem Maximalwert entsprechend dem innendurchmesser (d) des Abzweigungsansatzes (3, 3', 3", 3"', 3"", 30) ist,
c) der Flansch (2) des Abzweigungsansatzes (3, 3', 3", 3"', 3"", 30) sich über den Umfang des Querschnittes der Leitung (1) oder des Behälters über einen Winkel erstreckt, der 120° nicht übersteigt.

2. Abzweigungsteil-Verbindung nach Anspruch 1, **dadurch gekennzeichnet,** daß Einrichtungen (5),insbesondere zwei diametral einander gegenüberliegende Stifteinrichtungen auf der Außenfläche des Flansches (2) des Abzweigungsansatzes (3, 3', 3", 3"', 3"", 30) in einer Ebene vorgesehen sind, die die Leitung (1) durchquert, wobei ein Abzweigungsansatz (3, 3', 3", 3"', 3"", 30) zeitweilig an die Leitung (1) gebunden werden kann, um zu gewährleisten, daß der Abzweigungsansatz korrekt positioniert ist und sein Flansch (2) gegen die Außenoberfläche der Leitung (1) gepreßt wird, bis die wechselseitige Verbindung des Flansches (2) und der Leitung (1) erfolgt ist.

3. Abzweigungsteil-Verbindung nach Anspruch 1 oder 2, **dadurch gekennzeichnet,** daß im Inneren des Abzweigungsansatzes (30) spitzen- oder zentrierstiftführende Einrichtungen (31), die sich von der angeflanschten, an der Leitung (1) oder dem Behälter zu befestigenden Abzweigungsansatz-Endkante aus erstrecken, vorgesehen sind, um einen Bohrmeißel oder einen becherförmigen Bohrer mit Zentrierstift zu führen, wenn eine Bohrung (4, 4') in der Wand der Leitung (1) oder des Behälters ausgeführt werden soll, nachdem der Abzweigungsansatz (30) an die Leitung (1) oder den Behälter gebunden wurde.

4. Abzweigungsteil-Verbindung nach Anspruch 3, **dadurch gekennzeichnet,** daß die spitzen- oder zentrierstiftführenden Einrichtungen aus einem Stück mit dem Abzweigungsansatz (30) und mit dem gleichen Herstellungsverfahren, insbesondere durch Spritzguß des Abzweigungsansatzes (30) hergestellt sind.

5. Abzweigungsteil-Verbindung nach Anspruch 4, **dadurch gekennzeichnet,** daß die Spitzen- oder Zentrierstiftführungseinrichtungen in Form eines spitzen- oder zentrierstiftführenden rohrförmigen Elementes (31) vorliegen, welches im Inneren des Abzweigungsansatzes (30) koaxial mit diesem vorgesehen ist und sich von der angeflanschten, an der Leitung (1) zu befestigenden Endkante des Abzweigungsansatzes (30) aus erstreckt, wobei das spitzen- oder zentrierstiftführende rohrförmige Element (31) einen Durchmesser hat, der wesentlich kleiner als der Durchmesser des Abzweigungsansatzes (30) ist und seine untere Endkante an der angeflanschten, an der Leitung (1) zu befestigenden Endkante des Abzweigungsansatzes (30) mit Hilfe mehrerer radial angeordneter Verbindungsklammern oder mit Hilfe einer Endplatte (32) befestigt besitzt, welche, wenn eine Bohrung (4) in der Leitung (1) mit einem Bohrer mit Zentrierstift gemacht wird, durch diesen Bohrer weggenommen wird, während, wenn eine Bohrung (4') mit einem kleinen oder mittleren Durchmesser in der Leitung (1) durch einen Bohrmeißel gemacht wird, nur das spitzen- oder zentrierstiftführende rohrförmige Element (31) entweder ganz oder teilweise oder überhaupt nicht weggenommen wird.

6. Abzweigungsteil-Verbindung nach Anspruch 4, **dadurch gekennzeichnet,** daß das freie obere Endes des spitzen- oder zentrierstiftführenden rohrförmigen Elementes (31), das im Inneren des Abzweigungsansatzes (30) liegt, mit einer konisch erweiterten Öffnung (131) ausgebildet ist.

7. Abzweigungsteil-Verbindung nach einem der vorausgehenden Ansprüche 1 bis 6, **dadurch gekennzeichnet,** daß der Abzweigungsansatz (3, 3') mit einem Außengewinde (7, 13) ausgebildet ist.

8. Abzweigungsteil-Verbindung nach einem der vorausgehenden Ansprüche 1 bis 6, **dadurch gekennzeichnet,** daß der Abzweigungsansatz (3, 3') mit einem Innengewinde (11) ausgebildet ist.

9. Abzweigungsteil-Verbindung nach einem der vorausgehenden Ansprüche 1 bis 6, **dadurch gekennzeichnet,** daß der Abzweigungsansatz (3', 30) mit einer inneren und einer äußeren zylindrischen Oberfläche (9) ausgebildet ist, die an eine Rohrleitung oder ein Rohrleitungsverbinderteil angesetzt ist, die bzw. das in oder auf diesen Ansatz (3', 30) gepaßt ist.

10. Abzweigungsteil-Verbindung nach einem der vorausgehenden Ansprüche 1 bis 9, **dadurch gekennzeichnet,** daß der Abzweigungsansatz (3, 3') mit einem Außenringkragen (8) versehen ist.

11. Abzweigungsteil-Verbindung nach einem der vorausgehenden Ansprüche 1 bis 10, **dadurch gekennzeichnet,** daß der Abzweigungsansatz (3, 3') mit wenigstens einer Außenstufe ausgebildet ist, die die Verbindungstiefe mit einer Rohrleitung oder einem Rohrleitungsverbinderteil, die auf diesen Ansatz (3, 3') aufgepaßt sind, begrenzt.

12. Abzweigungsteil-Verbindung nach einem der vorausgehenden Ansprüche 1 bis 11, **dadurch gekennzeichnet,** daß der Abzweigungsansatz (3, 3', 3", 3"', 3"", 30) mit wenigstens einer Innenstufe (10, 12) ausgebildet ist, die die Verbindungstiefe mit einer Rohrleitung (14) oder einem Druckverbinderteil (16, 17, 18), die in Eingriff mit diesem Ansatz (3', 3", 3"', 3"", 30) stehen, begrenzt.

13. Abzweigungsteil-Verbindung nach einem der vorausgehenden Ansprüche 1 bis 11, **dadurch gekennzeichnet,** daß der Abzweigungsansatz (3, 3', 3", 3"', 3"", 30) mit voneinander beabstandeten Längsversteifungsrippen (6) wenigstens über jenen Abschnitt desselben ausgebildet ist, der nahe seinem Flansch (2) liegt.

14. Abzweigungsteil-Verbindung nach den Ansprüchen 7 und 12, **dadurch gekennzeichnet,** daß der Abzweigungsansatz (3"") ein einstückiges Teil eines Druckverbinderteils zur Verbindung einer starren oder flexiblen Rohrleitung (14) bildet, wobei dieses Verbinderteil einen Rohrleitungs-Verklammerungsring (18), der mit Innenzähnen versehen ist, umfaßt und eine äußere konische Oberfläche dazu gebracht wird, mit einer inneren konischen Oberfläche einer Ringmutter (19) zusammenzuwirken, die auf das Außengewinde (13) in dem Abzweigungsansatz (3"") aufgeschraubt ist, wobei eine zylindrische innere Abstandshalterhülse (17) zwischen dem Rohrleitungs-Verklammerungsring (18) und einem Packungsring (16), der auf der Innenstufe (12) in dem Abzweigungsansatz (3"") ruht, zwischengeschaltet ist und die Abstandshalterhülse (17) mit einer im wesentlichen gleichbemessenen Verschlußkappe (20) mit einer einstückigen Unterbrechungsplatte (120) an ihrem Kopfende austauschbar ist.

## Revendications

1. Raccord à pièce de jonction comprenant une pièce de jonction en matière plastique et un conduit ou réservoir cylindrique (1) en matière plastique, le conduit cylindrique (1) en matière plastique ou le réservoir contenant particulièrement des fluides sous pression du type normalement utilisé dans des domaines concernant les aqueducs, l'irrigation, l'ingénierie d'installations industrielles et le traitement des fluides en général, ladite pièce de jonction pouvant généralement mais non nécessairement être fournie ultérieurement, c'est-à-dire sur un conduit ou réservoir fixe, en fixant fermement un bout de jonction (3, 3', 3", 3"', 3"", 30) à la surface externe du conduit (1) ou du réservoir au moyen d'une bride (2) qui est formée conformément à la forme incurvée de la surface externe du conduit (1) ou du réservoir et est reliée à celui-ci au moyen d'un adhésif, ainsi qu'en présentant un alésage correspondant (4, 4') pratiqué dans la paroi du conduit (1) ou la paroi du réservoir, soit avant, soit de préférence après avoir fixé un bout de jonction (3, 3', 3", 3"', 3"", 30), caractérisé en ce que :
a) la bride (2) du bout-de jonction (3, 3', 3", 3"', 3"", 30) a une forme ovale ;
b) la largeur de la bride à forme ovale (2) du bout de jonction (3, 3', 3", 3"', 3"", 30), c'est-à-dire la valeur moyenne de la distance entre l'arête interne et externe de ladite bride (2), varie entre une valeur minimale correspondant à la moitié du diamètre interne (d) du bout de jonction (3, 3', 3", 3"', 3"", 30) à niveau avec sa bride (2, 102), et une valeur maximale correspondant au diamètre interne (d) du bout de jonction (3, 3', 3", 3"', 3"", 30) ;
c) la bride (2) du bout de jonction (3, 3', 3", 3"', 3"", 30) s'étend par dessus la circonférence de la coupe transversale du conduit (1) ou du réservoir selon un angle n'excédant pas 120°.

2. Raccord à pièce de jonction selon la revendication 1, caractérisé en ce que des moyens (5), particulièrement deux ergots diamétralement opposés, sont fournis sur la face externe de la bride (2) du bout de jonction (3, 3', 3", 3"', 3"", 30) dans un conduit (1) traversant le plan, un bout de jonction (3, 3', 3", 3"', 3"", 30) pouvant être temporairement fixé au conduit (1) de manière à garantir que le bout de jonction est correctement positionné et que sa bride (2) est pressée contre la surface externe du conduit (1) jusqu'à ce que la liaison mutuelle de la bride (2) et du conduit (1) soit effectuée.

3. Raccord à pièce de jonction selon la revendication 1 ou 2, caractérisé en ce que, à l'intérieur du bout de jonction (30), des moyens de guidage d'ergot ou de tige de centrage ou de mèche (31), s'étendant depuis l'arête terminale à bride du bout de jonction devant être fixée au conduit (1) ou au réservoir, sont fournis afin de guider une mèche de forage ou un foret en forme de godet muni d'un ergot ou tige de centrage lorsqu'un alésage (4, 4') est pratiqué dans la paroi du conduit (1) ou du réservoir après que le bout de jonction (30) a été relié au conduit (1) ou au réservoir.

4. Raccord à pièce de jonction selon la revendication 3, caractérisé en ce que les moyens de guidage d'ergot ou de tige de centrage ou de mèche (31) sont réalisés en une seule pièce avec le bout de jonction (30) et selon le même procédé de fabrication, particulièrement par moulage par injection du bout de jonction (30).

5. Raccord à pièce de jonction selon la revendication 4, caractérisé en ce que les moyens de guidage d'ergot de centrage ou de mèche ont la forme d'un élément tubulaire de guidage d'ergot de centrage ou de mèche (31) qui est fourni à l'intérieur du bout de jonction (30) coaxialement à celui-ci, et s'étend depuis l'extrémité terminale à bride du bout de jonction (30) devant être fixé au conduit (1), ledit élément tubulaire de guidage d'ergot ou de tige de centrage ou de mèche (31) ayant un diamètre qui est considérablement inférieur au diamètre du bout de jonction (30) et ayant son extrémité terminale inférieure fixée à l'extrémité terminale à bride du bout de jonction (30) devant être fixée au conduit (1) au moyen de plusieurs agrafes de connexion disposées de manière radiale ou au moyen d'une plaque terminale (32) qui, lorsqu'un alésage (4) est pratiqué dans le conduit (1) par un foret muni d'un ergot ou tige de centrage, est sorti par ce foret, tandis que lorsqu'un alésage (4') de petit ou moyen diamètre est pratiqué dans le conduit (1) par une mèche de forage, seul l'élément tubulaire de guidage d'ergot de centrage ou de mèche (31) est sorti soit totalement, soit partiellement ou n'est pas sorti du tout.

6. Raccord à pièce de jonction selon la revendication 4, caractérisé en ce que l'extrémité supérieure lâche de l'élément tubulaire de guidage d'ergot ou de tige de centrage ou de mèche (31) placée à l'intérieur du bout de jonction (30) est formée avec une ouverture arrondie de manière conique (131).

7. Raccord à pièce de jonction selon l'une des revendications 1 à 6, caractérisé en ce que le bout de jonction (3, 3') est formé avec un filetage externe (7, 13).

8. Raccord à pièce de jonction selon l'une des revendications 1 à 6, caractérisé en ce que le bout de jonction (3"') est formé avec un filetage interne (11).

9. Raccord à pièce de jonction selon l'une des revendications 1 à 6, caractérisé en ce que le bout de jonction (3', 30) est formé avec une surface cylindrique interne et externe (9) qui doit être reliée à un tuyau ou à une pièce de raccordement au tuyau disposé(e) à l'intérieur ou sur ce bout (3', 30).

10. Raccord à pièce de jonction selon l'une des revendications 1 à 9, caractérisé en ce que le bout de jonction (3, 3') est formé avec un collier annulaire externe (8).

11. Raccord à pièce de jonction selon l'une des revendications 1 à 10, caractérisé en ce que le bout de jonction (3, 3') est formé avec au moins un gradin externe qui est destiné à limiter la profondeur de connexion avec un tuyau ou une pièce de raccordement au tuyau disposé(e) sur ce bout (3, 3').

12. Raccord à pièce de jonction selon l'une des revendications 1 à 11, caractérisé en ce que le bout de jonction (3, 3', 3", 3"', 3"", 30) est formé avec au moins un gradin interne (10, 12) qui est destiné à limiter la profondeur de la connexion avec un tuyau (4) ou une pièce de raccordement sous pression (16, 17, 18) engagée dans ce bout (3, 3', 3", 3"', 3"", 30).

13. Raccord à pièce de jonction selon l'une des revendications 1 à 11, caractérisé en ce que le bout de jonction (3, 3', 3", 3"', 3"", 30) est formé avec des nervures de raidissement espacées (6) au moins par dessus la section de celui-ci qui est adjacente à sa bride (2).

14. Raccord à pièce de jonction selon les revendications 7 et 12, caractérisé en ce que le bout de jonction (3"") forme une partie intégrante d'une pièce de raccordement sous pression destinée à connecter un tuyau flexible ou rigide (14), ladite pièce de raccordement comprenant un anneau de serrage de tuyau (18) formé avec des dents internes et dont une surface conique externe est obligée de coopérer avec la surface conique interne d'un écrou à anneau (19) qui est fileté sur le filetage externe (13) dans le bout de jonction (3""), un manchon d'écartement interne (17) étant interposé entre l'anneau de serrage du tuyau (18) et un anneau d'étanchéité (16) reposant sur le gradin interne (12) dans le bout de jonction (3""), et ledit manchon d'écartement (17) étant remplaçable par un bouchon de fermeture (20) de taille essentiellement identique présentant une plaque d'interception intégrale (120) à l'extrémité frontale de celui-ci.
